# EUROPEAN PATENT SPECIFICATION

(11) **EP 4 286 671 B1**
(45) Date of publication and mention of the grant of the patent: **11.11.2026**
(21) Application number: 23170953.6
(22) Date of filing: 02.05.2023
(51) Int. Cl.: F02C 3/22, F02C 7/224

(54) **HYDROGEN-FUELLED GAS TURBINE ENGINE WITH FUEL-TO-AIR TURBOCHARGER**
WASSERSTOFFBETRIEBENER GASTURBINENMOTOR MIT BRENNSTOFF-LUFT-TURBOLADER
MOTEUR À TURBINE À GAZ ALIMENTÉ EN HYDROGÈNE AVEC TURBOCOMPRESSEUR CARBURANT-AIR

(30) Priority: 30.05.2022 GB 202207929
(43) Date of publication of application: 06.12.2023
(73) Proprietor: Rolls-Royce plc, London N1 9FX (GB)
(72) Inventor: Palmer, Chloe Jo, Derby, DE24 8BJ (GB)
(74) Representative: Rolls-Royce plc

(56) References cited:
- EP-A1- 3 904 658
- EP-A1- 3 943 732
- EP-A2- 3 855 002
- EP-A2- 3 978 807
- US-A1- 2016 123 226

## Description

### TECHNICAL FIELD

The invention relates to hydrogen-fuelled gas turbine engines and to aircraft comprising such engines.

### BACKGROUND

Waste heat generated within, and output by, the core of a hydrogen-fuelled gas turbine engine during its operation represents in theory an opportunity for recovery of large amounts of power which might be used to improve engine efficiency, or to provide power for use at the airframe level in the case of aeronautical applications. In the case of a large civil aero engine, potentially more than 5 MW might be available to be recovered. However, whilst very large amounts of power might be recovered in theory, the handling and use of large amounts of recovered power presents a technical challenge in terms of harnessing the recovered power in the most effective way possible, especially in aeronautical applications. For example, in the case of conversion of recovered heat to electrical power, a 5MW electrical generator might have a mass of between 250 kg and 500 kg (based on typical power densities in the range 10 - 20 kW/kg) and such conversion would also require associated power electronics (125 - 200 kg), large cables, as well as means for using the electrical power. Thus, conversion of large amounts of recovered heat to purely electrical power is not likely to be practical in aeronautical applications. Conversion of waste heat to purely mechanical power which is then input to a shaft of the engine is another possibility but would also have an unacceptable weight penalty in aeronautical applications due to the weight of mechanical gearing that would be required. Document EP 3 978 807 A2 discloses a hydrogen-fuelled gas turbine engine known in the art.

### BRIEF SUMMARY

A first aspect of the invention provides a hydrogen-fuelled gas turbine engine having a fuel input path from a fuel input of the engine to a combustor thereof, the engine further comprising a heat-exchanger located in the fuel input path and a fuel turbine located in the fuel input path between the heat-exchanger and the combustor, wherein the heat-exchanger is arranged to receive waste heat from the engine core in order to heat hydrogen fuel introduced at the fuel input prior to input thereof to the combustor, the engine further comprising an air compressor arranged to be driven by the fuel turbine. The engine allows the energy of waste heat generated during its operation to be recovered and used without the need for heavy electrical of mechanical apparatus. An engine of the invention is therefore particularly advantageous in aeronautical applications.

The heat-exchanger may be a recuperator arranged to receive combustion gases output from the turbine section of the engine.

The engine may further comprise a second heat-exchanger located in the fuel input path between the recuperator and the fuel turbine, the second heat-exchanger being physically disposed between first and second compressor stages of the engine, the first compressor stage being located upstream of the second compressor stage, and the recuperator being arranged to heat hydrogen fuel introduced at the fuel input to a temperature below the discharge temperature of the first compressor stage.

The engine may further comprise a third heat-exchanger, the third heat-exchanger being a second recuperator located in the fuel input path between the second heat-exchanger and the fuel turbine, the second recuperator being physically located between the turbine section of the engine and the first recuperator and arranged to receive combustion gases output from the turbine section of the engine.

The engine may further comprise a heat exchanger arranged to transfer heat from air output by the air compressor to gaseous hydrogen fuel introduced at the fuel input prior to input of the gaseous hydrogen fuel to the combustor.

The engine may be a turbofan engine, a turboprop engine, a turboshaft engine or a turbojet engine.

A second aspect of the invention provides an aircraft comprising an engine according to the first aspect, the engine being arranged to provide at least one of propulsive thrust and lift to the aircraft, the aircraft further comprising air flow ducting arranged to deliver air output by the air compressor to one or more parts of the aircraft and an air scooping arrangement arranged to direct ambient air to the air compressor in operation of the aircraft.

The airflow ducting may be arranged to deliver air output by the air compressor to one or more of an engine cowling, an engine nacelle, a pylon, a wing and the fuselage of the aircraft.

The air flow ducting may be arranged to provide air for boundary layer disruption at one or more surfaces of the aircraft.

The air flow ducting may be arranged to provide air for de-icing of one or more surfaces of the aircraft, for example a wing surface of a wing of the aircraft.

The aircraft may further comprise an air turbine, the air flow ducting being arranged to deliver air output by the air compressor to the air turbine.

A portion of the air flow ducting may be arranged to deliver air output from the air turbine to one or more or systems of the aircraft requiring cooling during operation of the aircraft, for example one or more of an electronic system, an environmental control system, an actuation system and an engine oil system of the aircraft.

The air flow ducting may be arranged to deliver air output from the air compressor to a pneumatic system of the aircraft. The pneumatic system may be arranged to control variable stator vanes of the engine.

The air flow ducting may be arranged to deliver air output by the air compressor to at least one of an environmental control system of the aircraft and a cabin or cockpit of the aircraft to provide heat to the environmental control system, or to the cockpit or cabin, as the case may be.

The aircraft may further comprise a store of liquid hydrogen, a vaporiser arranged to vaporise liquid hydrogen from the store to produce gaseous hydrogen fuel for input to the fuel input of the engine, the aircraft further comprising a heat exchanger arranged to transfer heat from the vaporiser to gaseous hydrogen fuel introduced at the fuel input prior to input of the gaseous hydrogen fuel to the combustor of the engine.

The engine, or the aircraft, may further comprise an electric generator arranged to be driven by the air compressor.

### BRIEF DESCRIPTION OF THE DRAWINGS

Embodiments of the invention are described below by way of example only and with reference to the accompanying drawings in which:
- Figure 1: shows an aircraft of the invention;
- Figure 2: shows a fuel system of the Figure 1 aircraft;
- Figure 3: shows part of a hydrogen-fuelled turbofan engine comprised in the Figure 1 aircraft;
- Figure 4: shows the hydrogen-fuelled turbofan engine part of which is shown in Figure 3; and
- Figure 5: shows an alternative to the arrangement of Figure 3.

### DETAILED DESCRIPTION

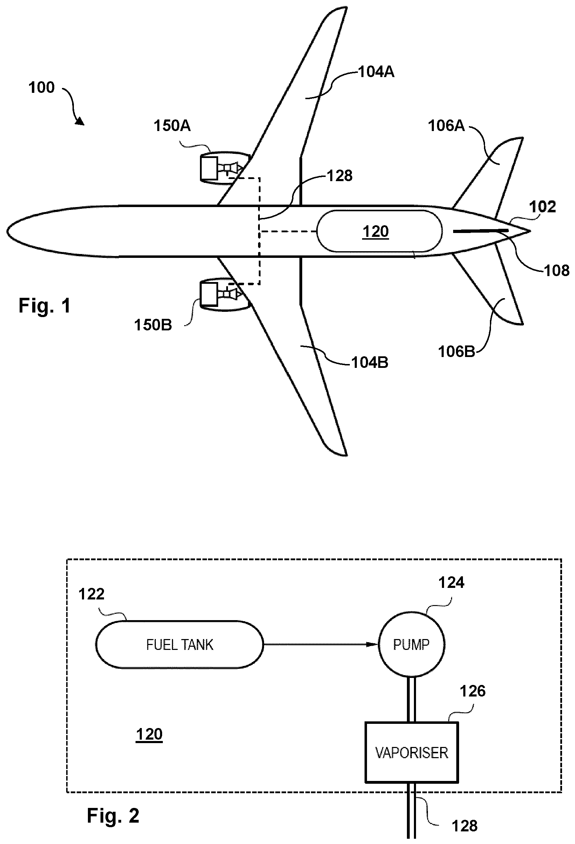

Figure 1 shows a plan view of an aircraft 100 of the invention, the aircraft 100 comprising a fuselage 102, wings 104A, 104B, horizontal stabilisers 106A, 106B, a vertical stabiliser 108, a fuel system 120, a fuel supply network 128 and first and second hydrogen-fuelled turbofan engines 150A, 150B mounted under wings 104A, 104B respectively. The stabilisers 106A, 106B, 108 and the wings 104A, 104 comprise elevators, a rudder and ailerons respectively which are not shown separately in Figure 1.

Figure 2 shows the fuel system 120 of the aircraft 100 in detail. The fuel system 120 comprises a cryogenic fuel tank 122 storing liquid hydrogen fuel, a pump 124 and a vaporiser 126. The pump 124 is arranged to pump liquid hydrogen to the vaporiser 126 which converts the liquid hydrogen fuel to gaseous hydrogen fuel. The gaseous hydrogen fuel is provided to the hydrogen-fuelled turbofan engines 150A, 150B via the fuel supply network 128. The vaporiser 126 may for example be of a type described in published European Patent Application EP 3 978 738 A1. The hydrogen-fuelled turbofan engines 150A, 150B are identical.

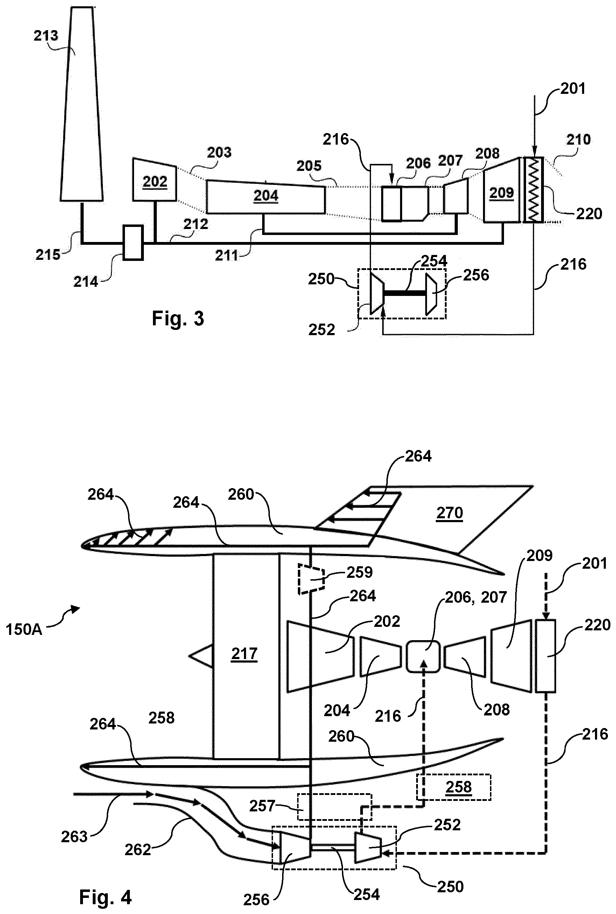

Figure 3 shows part of the first hydrogen-fuelled turbofan engine 150A. The first turbofan engine 150A comprises a propulsive fan having fan blades such as 213, a high-pressure compressor 202, an inter-stage duct 203, a low-pressure compressor 204, a diffuser 205, a fuelling system 206, a hydrogen combustor 207, a high-pressure turbine 207, a low-pressure turbine 209 and a core exit nozzle 210. The high-pressure compressor 204 and the high-pressure turbine 208 are mounted on a high-pressure shaft 211; the low-pressure compressor 202 and the low-pressure turbine 209 are mounted on a low-pressure shaft 212. The low-pressure shaft 212 is mechanically coupled to the input of a reduction gear 214; a fan shaft 215 mounts the fan and is mechanically coupled to the output of the reduction gear 214.

The first turbofan engine 150A further comprises a fuel line 216 which provides a fuel input path from a fuel input 201 of the first turbofan engine 150A to the combustor 207 thereof, the fuel input path including a recuperator 220 and a fuel turbine 252, the fuel turbine 252 being located in the fuel input path between the recuperator 220 and the combustor 207. The recuperator 220 is physically located to receive gaseous combustion products output from the turbine section of the engine 150A, the turbine section comprising the high- and low-pressure turbines 208, 209. The fuel turbine 252 is comprised in a fuel-to-air turbocharger 250 which further comprises an air compressor 256 arranged to be driven by the fuel turbine 252. The air compressor 256 is separate to the compressors 202, 204 of the gas turbine engine, and does not communicate with core gas turbine flow. The air compressor 256 is also decoupled from the core shafts 211, 212. Optionally, the turbocharger 250 may include an electrical generator (not shown) arranged to be driven by the air compressor 256.

Referring additionally to Figure 3 the first turbofan engine 150A further comprises a fan case 217, a nacelle 260, air scoop 262 and air flow ducting 264. The engine 150A is mounted to the underside of wing 104A by a pylon 270. Optionally, the engine 150A may further include a heat exchanger 257 and/or a heat exchanger 258.

In operation of the aircraft 100, gaseous hydrogen is provided from the fuel system 120 to the fuel input 201 of the first turbofan engine 150A via the fuel supply network 128. The gaseous hydrogen input at the fuel input 201 may for example have a temperature of about -20°C. Heat from the gaseous combustion products output from the turbine section 208, 209 of the first turbofan engine 150A passes into the gaseous hydrogen passing through the recuperator 220, thus heating the gaseous hydrogen prior to input of the gaseous hydrogen to the fuelling system 206 and the combustor 207 via the fuel turbine 254. Ambient air 263 is collected and directed to the air compressor 256 of the fuel-to-air turbocharger 250 by the air scoop 262. Air flow ducting 264 provides air output from the air compressor 256 to the interiors of the nacelle 262 and the pylon 270; the air then exits the nacelle 262 and pylon 270 via apertures in their exterior surfaces, thus reduce the drag of the aircraft. The airflow ducting may additionally or alternatively provide air to the exterior surface of the fuselage 102 of the aircraft 100 for the same purpose. The air flow ducting 264 may be arranged to provide an air flow for boundary layer disruption at one or more surfaces of the aircraft 100.

The air flow ducting 264 may extend to wings 104A, 104B (or other parts) of the aircraft 100 to provide air flow to a surface for de-icing, for example wing de-icing. The ducting 264 may also provide air to a pneumatic system of the aircraft 100, for example to control variable stator vanes of the engine 150A, or to a pneumatic actuation system which replaces a conventional hydraulic actuation system. Air output by the air compressor 256 may also be used to provide air input for an environment control system (ECS) of the aircraft 100.

The air flow ducting 264 may include one or more air turbines, such as 259, at various locations on the aircraft 100, the air turbines extracting mechanical power from air output by the air compressor 256 for use in various applications.

The turbocharger 250 is largely self-controlling. For example, at maximum take-off (MTO) the power supplied to fuel turbine 256 of the turbocharger 250 will be at its operational maximum since the flow of hydrogen fuel into the combustor 207 and hence the heat captured by the recuperator 220 are also maximised. The mass flow rate of air to the air compressor 256 via the air scoop 262 is also maximised at MTO since at ground level the aircraft 100 operates with the densest ambient air encountered during a flight cycle. During cruise conditions, the fuel flow rate to the combustor 207 and the temperature of the core exhaust of the engine 150A are lower, and the relative speed of air entering the scoop 262, and its density, are also lower.

The heat exchanger 257, where present, transfers heat from air output by the air compressor 256 to the gaseous hydrogen fuel within the fuel line 216 prior to input of the fuel to the fuelling system 206 and combustor 207. In a case where the vaporiser 126 of the fuel system 120 produces heat, the heat exchanger 258 may be included to couple heat from the vaporiser into the gaseous hydrogen fuel prior to input thereof to the fuelling system 206 and combustor 207.

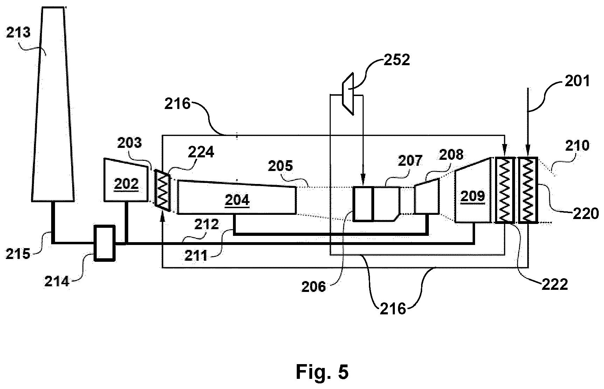

Figure 5 shows an alternative to the Figure 3 arrangement for the engine core and turbocharger of the engine 150A. In this case the fuel input path of the engine 150A defined by fuel line 216 from the fuel input 201 to the fuelling system 206 and combustor 207 additionally includes a heat-exchanger 224 and a second recuperator 222. In the fuel input path, the heat-exchanger 224 is located between the first and second recuperators 220, 222 and the fuel turbine 252 of the fuel-to-air turbocharger is located between the second recuperator 222 and the combustor 207. The heat exchanger 224 is physically disposed between the low- and high-pressure compressors 202, 204 of the turbofan engine 150A and the second recuperator 222 is physically disposed within the engine nozzle 210 between the exit of the turbine section 208, 209 of the engine 150A and the first recuperator 220. In operation of the engine 150A with the Figure 5 arrangement, the first recuperator 220 receives less heat from the engine core of the engine 150A than does the second recuperator 222 and heats the gaseous hydrogen fuel within the fuel line 216 to a temperature below the discharge temperature of the low-pressure compressor 202. The heat exchanger 224 and the second recuperator 222 further heat gaseous hydrogen fuel within the fuel line 216 (fuel input path) prior to delivery thereof to the fuelling system 206 and combustor 207 via the fuel turbine 252. Where the Figure 5 arrangement is employed, either or both of the heat exchangers 257, 258 may be included.

## Claims

1. A hydrogen-fuelled gas turbine engine (150A, 150B) having a fuel input path from a fuel input (201) of the engine (150A, 150B) to a combustor (207) thereof, the engine (150A, 150B) further comprising a heat-exchanger (220, 222, 224) located in the fuel input path and a fuel turbine (252) located in the fuel input path between the heat-exchanger (224) and the combustor (207), wherein the heat-exchanger (224) is arranged to receive waste heat from the engine core in order to heat hydrogen fuel introduced at the fuel input (201) prior to input thereof to the combustor (207), **characterised in that** the engine further comprises an air compressor (256) which is separate to compressors (202, 204) of the gas turbine engine, and does not communicate with core gas turbine flow and is decoupled from core engine shafts (210, 211), and is arranged to be driven by the fuel turbine (252), and wherein the engine is arranged to provide, in use, at least one of propulsive thrust and lift to an aircraft (100), and wherein the engine further comprises air flow ducting (264) arranged to deliver, in use, air output by the air compressor (256) to one or more parts of the aircraft (100) and an air scooping arrangement (262) arranged to direct ambient air to the air compressor (256) in operation of the aircraft.

2. An engine according to claim 1 where in the heat-exchanger is a recuperator (220) arranged to receive combustion gases output from the turbine section (208, 209) of the engine (150A, 150B).

3. An engine according to claim 2 further comprising a second heat-exchanger (224) located in the fuel input path between the recuperator (220) and the fuel turbine (252), the second heat-exchanger (224) being physically disposed between first (202) and second (204) compressor stages of the engine (150A, 150B), the first compressor stage (202) being located upstream of the second compressor stage (204), and wherein the recuperator (220) is arranged to heat hydrogen fuel introduced at the fuel input to a temperature below the discharge temperature of the first compressor stage (202).

4. An engine according to claim 3 further comprising a third heat-exchanger (222), the third heat-exchanger being a second recuperator (222) located in the fuel input path between the second heat-exchanger (224) and the fuel turbine (252), the second recuperator (222) being physically located between the turbine section (208, 209) of the engine and the first recuperator (220) and arranged to receive combustion gases output from the turbine section (208, 209) of the engine.

5. An engine according to any preceding claim further comprising a heat exchanger (257) arranged to transfer heat from air output by the air compressor (256) to gaseous hydrogen fuel introduced at the fuel input prior to input of the gaseous hydrogen fuel to the combustor (207).

6. An engine according to any preceding wherein the engine is a turbofan engine (150A, 150B), a turboprop engine, a turboshaft engine or a turbojet engine.

7. An engine according to any of the preceding claims, wherein the airflow ducting is arranged to deliver air output by the air compressor (264) to one or more of an engine cowling, an engine nacelle (260), a pylon (270), a wing (104A, 104B) and the fuselage (102) of the aircraft (100).

8. An engine according to any of the preceding claims wherein the air flow ducting (264) is arranged to provide air for boundary layer disruption at one or more surfaces of the aircraft.

9. An engine according to any of the preceding claims wherein the air flow ducting (264) is arranged to provide air for de-icing of one or more surfaces of the aircraft, for example a wing surface of a wing (104A, 104B) of the aircraft (100).

10. An engine according to any of the preceding claims further comprising an air turbine (259) and wherein the air flow ducting (264) is arranged to deliver air output by the air compressor (156) to the air turbine (259).

11. An engine according to claim 9 where a portion of the air flow ducting (264) is arranged to deliver air output from the air turbine (259) to one or more or systems of the aircraft requiring cooling during operation of the aircraft, for example one or more of an electronic system, an environmental control system, an actuation system and an engine oil system of the aircraft (100).

12. An engine according to any of the preceding claims wherein the air flow ducting (264) is arranged to deliver air output from the air compressor (256) to a pneumatic system of the aircraft (100).

13. An engine according to claim 12 wherein the pneumatic system is arranged to control variable stator vanes of the engine (150A, 150B).

14. An engine according to any of the preceding claims wherein the air flow ducting (264) is arranged to deliver air output by the air compressor (256) to at least one of an environmental control system of the aircraft and a cabin or cockpit of the aircraft to provide heat to the environmental control system, or to the cockpit or cabin, as the case may be.

15. An engine according to any of the preceding claims further comprising a store of liquid hydrogen (122), a vaporiser (126) arranged to vaporise liquid hydrogen from the store (122) to produce gaseous hydrogen fuel for input to the fuel input of the engine (150A, 150B), wherein the aircraft (100) further comprises a heat exchanger (258) arranged to transfer heat from the vaporiser (126) to gaseous hydrogen fuel introduced at the fuel input (201) prior to input of the gaseous hydrogen fuel to the combustor (207) of the engine (150A, 150B).

16. An engine according to any of the preceding claims, or an engine according to any of claims 1 to 6, further comprising an electric generator arranged to be driven by the air compressor (256).

## Patentansprüche

1. Wasserstoffbetriebener Gasturbinenmotor (150A, 150B) mit einem Brennstoffeinlassweg von einem Brennstoffeinlass (201) des Motors (150A, 150B) zu einer Brennkammer (207) davon, wobei der Motor (150A, 150B) ferner einen Wärmetauscher (220, 222, 224), der sich in dem Brennstoffeinlassweg befindet, und eine Brennstoffturbine (252), die sich in dem Brennstoffeinlassweg zwischen dem Wärmetauscher (224) und der Brennkammer (207) befindet, umfasst, wobei der Wärmetauscher (224) dazu angeordnet ist, Abwärme von dem Motorkern zu empfangen, um Wasserstoffbrennstoff, der an dem Brennstoffeinlass (201) eingeführt wird, vor Einlass davon in die Brennkammer (207) zu erwärmen, **dadurch gekennzeichnet, dass** der Motor ferner einen Luftverdichter (256) umfasst, der separat von Verdichtern (202, 204) des Gasturbinenmotors ist und nicht mit Kerngasturbinenfluss kommuniziert und von Kernmotorwellen (210, 211) entkoppelt ist und dazu angeordnet ist, durch die Brennstoffturbine (252) angetrieben zu werden, und wobei der Motor dazu angeordnet ist, in Verwendung zumindest eines von Antriebskraft und Hub an ein Luftfahrzeug (100) bereitzustellen, und wobei der Motor ferner Luftflussführung (264), die dazu angeordnet ist, in Verwendung Luft, die durch den Luftverdichter (256) ausgegeben wird, an einen oder mehrere Teile des Luftfahrzeugs (100) zu liefern, und eine Luftschöpfungsanordnung (262), die dazu angeordnet ist, Umgebungsluft zu dem Luftverdichter (256) in Betrieb des Luftfahrzeugs zu leiten, umfasst.

2. Motor nach Anspruch 1, wobei in dem Wärmetauscher ein Rekuperator (220) angeordnet ist, um Verbrennungsgase zu empfangen, die von dem Turbinenabschnitt (208, 209) des Motors (150A, 150B) ausgegeben werden.

3. Motor nach Anspruch 2, ferner umfassend einen zweiten Wärmetauscher (224), der sich in dem Brennstoffeinlassweg zwischen dem Rekuperator (220) und der Brennstoffturbine (252) befindet, wobei der zweite Wärmetauscher (224) physisch zwischen einer ersten (202) und einer zweiten (204) Verdichterstufe des Motors (150A, 150B) vorgesehen ist, wobei sich die erste Verdichterstufe (202) stromaufwärts der zweiten Verdichterstufe (204) befindet und wobei der Rekuperator (220) dazu angeordnet ist, Wasserstoffbrennstoff, der an dem Brennstoffeinlass eingeführt wird, auf eine Temperatur unter der Ausstoßtemperatur der ersten Verdichterstufe (202) zu erwärmen.

4. Motor nach Anspruch 3, ferner umfassend einen dritten Wärmetauscher (222), wobei der dritte Wärmetauscher ein zweiter Rekuperator (222) ist, der sich in dem Brennstoffeinlassweg zwischen dem zweiten Wärmetauscher (224) und der Brennstoffturbine (252) befindet, wobei sich der zweite Rekuperator (222) physisch zwischen dem Turbinenabschnitt (208, 209) des Motors und dem ersten Rekuperator (220) befindet und dazu angeordnet ist, Verbrennungsgase zu empfangen, die von dem Turbinenabschnitt (208, 209) des Motors ausgegeben werden.

5. Motor nach einem vorhergehenden Anspruch, ferner umfassend einen Wärmetauscher (257), der dazu angeordnet ist, Wärme von Luft, die durch den Luftverdichter (256) ausgegeben wird, auf gasförmigen Wasserstoffbrennstoff, der an dem Brennstoffeinlass eingeführt wird, vor Einlass des gasförmigen Wasserstoffbrennstoffes in die Brennkammer (207) zu übertragen.

6. Motor nach einem vorhergehenden, wobei der Motor ein Turbofan-Motor (150A, 150B), ein Turboprop-Motor, ein Turbowellenmotor oder ein Turbostrahlmotor ist.

7. Motor nach einem der vorhergehenden Ansprüche, wobei die Luftflussführung dazu angeordnet ist, Luft, die durch den Luftverdichter (264) ausgegeben wird, an eines oder mehrere von einer Motorverkleidung, einer Motorgondel (260), einem Pylon (270), einem Flügel (104A, 104B) und dem Rumpf (102) des Luftfahrzeugs (100) zu liefern.

8. Motor nach einem der vorhergehenden Ansprüche, wobei die Luftflussführung (264) dazu angeordnet ist, Luft für Grenzschichtunterbrechung an einer oder mehreren Oberflächen des Luftfahrzeugs bereitzustellen.

9. Motor nach einem der vorhergehenden Ansprüche, wobei die Luftflussführung (264) dazu angeordnet ist, Luft zum Enteisen von einer oder mehreren Oberflächen des Luftfahrzeugs, zum Beispiel einer Flügeloberfläche eines Flügels (104A, 104B) des Luftfahrzeugs (100), bereitzustellen.

10. Motor nach einem der vorhergehenden Ansprüche, ferner umfassend eine Luftturbine (259), und wobei die Luftflussführung (264) dazu angeordnet ist, Luft, die durch den Luftverdichter (156) ausgegeben wird, an die Luftturbine (259) zu liefern.

11. Motor nach Anspruch 9, wobei ein Abschnitt der Luftflussführung (264) dazu angeordnet ist, Luft, die von der Luftturbine (259) ausgegeben wird, an ein oder mehrere oder Systeme des Luftfahrzeugs zu liefern, die während Betrieb des Luftfahrzeugs Kühlung erfordern, zum Beispiel eines oder mehrere von einem elektronischen System, einem Umgebungssteuersystem, einem Betätigungssystem und einem Motorölsystem des Luftfahrzeugs (100).

12. Motor nach einem der vorhergehenden Ansprüche, wobei die Luftflussführung (264) dazu angeordnet ist, Luft, die von dem Luftverdichter (256) ausgegeben wird, an ein pneumatisches System des Luftfahrzeugs (100) zu liefern.

13. Motor nach Anspruch 12, wobei das pneumatische System dazu angeordnet ist, variable Statorschaufeln des Motors (150A, 150B) zu steuern.

14. Motor nach einem der vorhergehenden Ansprüche, wobei die Luftflussführung (264) dazu angeordnet ist, Luft, die durch den Luftverdichter (256) ausgegeben wird, an zumindest eines von einem Umgebungssteuersystem des Luftfahrzeugs und einer Kabine oder einem Cockpit des Luftfahrzeugs zu liefern, um dem Umgebungssteuersystem oder dem Cockpit oder der Kabine, je nach Fall, Wärme bereitzustellen.

15. Motor nach einem der vorhergehenden Ansprüche, ferner umfassend einen Speicher für flüssigen Wasserstoff (122), einen Verdampfer (126), der dazu angeordnet ist, flüssigen Wasserstoff aus dem Speicher (122) zu verdampfen, um gasförmigen Wasserstoffbrennstoff zum Einlass in den Brennstoffeinlass des Motors (150A, 150B) zu produzieren, wobei das Luftfahrzeug (100) ferner einen Wärmetauscher (258) umfasst, der dazu angeordnet ist, Wärme von dem Verdampfer (126) auf gasförmigen Wasserstoffbrennstoff, der an dem Brennstoffeinlass (201) eingeführt wird, vor Einlass des gasförmigen Wasserstoffbrennstoffs in die Brennkammer (207) des Motors (150A, 150B) zu übertragen.

16. Motor nach einem der vorhergehenden Ansprüche oder Motor nach einem der Ansprüche 1 bis 6, ferner umfassend einen elektrischen Generator, der dazu angeordnet ist, durch den Luftverdichter (256) angetrieben zu werden.

## Revendications

1. Moteur à turbine à gaz alimenté en hydrogène (150A, 150B) ayant un trajet d'admission de carburant allant d'une entrée de carburant (201) du moteur (150A, 150B) à une chambre de combustion (207) de celui-ci, le moteur (150A, 150B) comprenant en outre un échangeur de chaleur (220, 222, 224) situé sur le trajet d'admission de carburant et une turbine à carburant (252) située sur le trajet d'admission de carburant entre l'échangeur de chaleur (224) et la chambre de combustion (207), dans lequel l'échangeur de chaleur (224) est agencé pour recevoir la chaleur résiduelle provenant du cœur du moteur afin de chauffer le carburant hydrogène introduit au niveau de l'entrée de carburant (201) avant son admission dans la chambre de combustion (207), **caractérisé en ce que** le moteur comprend en outre un compresseur d'air (256) qui est distinct des compresseurs (202, 204) du moteur à turbine à gaz, et ne communique pas avec le flux de gaz de cœur de la turbine et est découplé des arbres de moteur de cœur (210, 211), et est agencé pour être entraîné par la turbine à carburant (252), et dans lequel le moteur est agencé pour fournir, lors de l'utilisation, au moins l'une d'une poussée propulsive et d'une portance à un aéronef (100), et dans lequel le moteur comprend en outre un conduit d'écoulement d'air (264) agencé pour délivrer, lors de l'utilisation, une sortie d'air par le compresseur d'air (256) à une ou plusieurs parties de l'aéronef (100) et un agencement d'écopage d'air (262) agencé pour diriger l'air ambiant vers le compresseur d'air (256) lors du fonctionnement de l'aéronef.

2. Moteur selon la revendication 1, dans lequel dans l'échangeur de chaleur est un récupérateur (220) agencé pour recevoir les gaz de combustion émis par la section de turbine (208, 209) du moteur (150A, 150B).

3. Moteur selon la revendication 2, comprenant en outre un deuxième échangeur de chaleur (224) situé sur le trajet d'admission de carburant entre le récupérateur (220) et la turbine à carburant (252), le deuxième échangeur de chaleur (224) étant physiquement disposé entre les premier (202) et second (204) étages de compresseur du moteur (150A, 150B), le premier étage de compresseur (202) étant situé en amont du second étage de compresseur (204), et dans lequel le récupérateur (220) est agencé pour chauffer le carburant hydrogène introduit au niveau de l'entrée de carburant à une température inférieure à la température de décharge du premier étage de compresseur (202).

4. Moteur selon la revendication 3, comprenant en outre un troisième échangeur de chaleur (222), le troisième échangeur de chaleur étant un deuxième récupérateur (222) situé sur le trajet d'admission de carburant entre le deuxième échangeur de chaleur (224) et la turbine à carburant (252), le deuxième récupérateur (222) étant physiquement situé entre la section de turbine (208, 209) du moteur et le premier récupérateur (220) et agencé pour recevoir les gaz de combustion émis par la section de turbine (208, 209) du moteur.

5. Moteur selon l'une quelconque des revendications précédentes, comprenant en outre un échangeur de chaleur (257) agencé pour transférer la chaleur provenant de la sortie d'air par le compresseur d'air (256) au carburant hydrogène gazeux introduit au niveau de l'entrée de carburant avant l'entrée du carburant hydrogène gazeux à la chambre de combustion (207).

6. Moteur selon l'une quelconque des précédentes, dans lequel le moteur est un moteur à double flux (150A, 150B), un turbopropulseur, un turbomoteur ou un turboréacteur.

7. Moteur selon l'une quelconque des revendications précédentes, dans lequel le conduit d'écoulement d'air est agencé pour délivrer une sortie d'air par le compresseur d'air (264) à un ou plusieurs éléments parmi un capot de moteur, une nacelle de moteur (260), un pylône (270), une aile (104A, 104B) et le fuselage (102) de l'aéronef (100).

8. Moteur selon l'une quelconque des revendications précédentes, dans lequel le conduit d'écoulement d'air (264) est agencé pour fournir de l'air pour la rupture de la couche limite au niveau d'une ou plusieurs surfaces de l'aéronef.

9. Moteur selon l'une quelconque des revendications précédentes, dans lequel le conduit d'écoulement d'air (264) est agencé pour fournir de l'air pour le dégivrage d'une ou plusieurs surfaces de l'aéronef, par exemple une surface d'aile d'une aile (104A, 104B) de l'aéronef (100).

10. Moteur selon l'une quelconque des revendications précédentes, comprenant en outre une turbine à air (259) et dans lequel le conduit d'écoulement d'air (264) est agencé pour délivrer une sortie d'air par le compresseur d'air (156) à la turbine à air (259).

11. Moteur selon la revendication 9, dans lequel une partie du conduit d'écoulement d'air (264) est agencée pour délivrer une sortie d'air provenant de la turbine à air (259) à un ou plusieurs systèmes de l'aéronef nécessitant un refroidissement pendant le fonctionnement de l'aéronef, par exemple un ou plusieurs parmi un système électronique, un système de régulation climatique, un système d'actionnement et un système d'huile de moteur de l'aéronef (100).

12. Moteur selon l'une quelconque des revendications précédentes, dans lequel le conduit d'écoulement d'air (264) est agencé pour délivrer une sortie d'air provenant du compresseur d'air (256) à un système pneumatique de l'aéronef (100).

13. Moteur selon la revendication 12, dans lequel le système pneumatique est agencé pour commander les aubes de stator variables du moteur (150A, 150B).

14. Moteur selon l'une quelconque des revendications précédentes, dans lequel le conduit d'écoulement d'air (264) est agencé pour délivrer une sortie d'air par le compresseur d'air (256) à au moins l'un d'un système de régulation climatique de l'aéronef et d'une cabine ou d'un cockpit de l'aéronef afin de fournir de la chaleur au système de régulation climatique, ou au cockpit ou à la cabine, selon le cas.

15. Moteur selon l'une quelconque des revendications précédentes, comprenant en outre un réservoir d'hydrogène liquide (122), un vaporisateur (126) agencé pour vaporiser l'hydrogène liquide provenant du réservoir (122) afin de produire du carburant hydrogène gazeux destiné à être entré à l'entrée de carburant du moteur (150A, 150B), dans lequel l'aéronef (100) comprend en outre un échangeur de chaleur (258) agencé pour transférer la chaleur provenant du vaporisateur (126) au carburant hydrogène gazeux introduit au niveau de l'entrée de carburant (201) avant l'entrée du carburant hydrogène gazeux dans la chambre de combustion (207) du moteur (150A, 150B).

16. Moteur selon l'une quelconque des revendications précédentes, ou moteur selon l'une quelconque des revendications 1 à 6, comprenant en outre un générateur électrique agencé pour être entraîné par le compresseur d'air (256).
